**Europäisches Patentamt**

**European Patent Office**

**Office européen des brevets**

(19)

(11) Veröffentlichungsnummer: **0 250 812**
**A2**

(12) **EUROPÄISCHE PATENTANMELDUNG**

(21) Anmeldenummer: **87107063.7**

(22) Anmeldetag: **15.05.87**

(51) Int. Cl.³: **G 11 B 5/127**

(30) Priorität: **30.06.86 DE 3621873**

(43) Veröffentlichungstag der Anmeldung:
**07.01.88 Patentblatt 88/1**

(84) Benannte Vertragsstaaten:
**AT DE FR GB IT**

(71) Anmelder: **GRUNDIG E.M.V. Elektro-Mechanische Versuchsanstalt Max Grundig holländ. Stiftung & Co. KG.**
**Kurgartenstrasse 37**
**D-8510 Fürth(DE)**

(72) Erfinder: **Gukkenberger, Horst, Dipl.-Ing. c/o GRUNDIG E.M.V.**
**Max Grundig Holländ Stiftung & Co. KG**
**Kurgartenstrasse 37 D-8510 Fürth/Bay(DE)**

(72) Erfinder: **Eberle, Karl, Dipl.-Ing. c/o GRUNDIG E.M.V.**
**Max Grundig Holländ Stiftung & Co. KG**
**Kurgartenstrasse 37 D-8510 Fürth/Bay(DE)**

(54) **Verfahren zur Herstellung eines Magnetkopfes.**

(57) Beschrieben ist ein Verfahren zur Herstellung eines Magnetkopfes für Video-Magnetbandgeräte, bei dem zwei weichmagnetische Kernhälften aus amorphem Metall über einen unmagnetischen Arbeitsspalt verbunden sind, und bei dem die Kernhälften beidseitig von zwei Kernträgern gestützt sind. Die Kernträger weisen im Spaltbereich und im Rückschlußbereich des derart aufgebauten Kopfblocks beidseitig des Kopfspaltes einen Verbindungskörper auf. Über den Verbindungskörper werden die Kopfteile miteinander zu einer mechanisch stabilen Einheit verschweißt.

Fig. 1

3

# VERFAHREN ZUR HERSTELLUNG EINES MAGNETKOPFES

## BESCHREIBUNG

Die Erfindung betrifft ein Verfahren zur Herstellung eines Magnetkopfes, bei dem zwei weichmagnetische Kernhälften aus amorphem Metall über einen unmagnetischen Arbeitsspalt verbunden sind, bei dem die Kernhälften beidseitig von zwei Kernträgern gestützt zu einem Kopfblock zusammengefaßt sind, und die Kernträger im Spaltbereich und im Rückschluß-Bereich einen Verbindungskörper aufweisen, sowie um mindestens eine Kernhälfte Spulenwindungen gewickelt sind, daß ferner ein Kopfblock aus zwei verbundenen Halbblöcken abgetrennt ist.

Bei Videomagnetbandgeräten der Unterhaltungselektronik werden Magnetköpfe mit kleinen Spurbreiten und extrem

4

kleinen Spaltbreiten in großer Stückzahl eingesetzt.
Dies hat zur Folge, daß das Volumen eines derartigen
Kopfes sehr klein ist. Das Hauptproblem der Herstellung
eines derart kleinen Magnetkopfes in großen Serien
besteht darin, dem mit einem Arbeitsspalt versehenen
Ringkern eine ausreichende mechanische Stabilität und
dem Magnetkopf eine verschleißmäßig hohe Lebensdauer
zu geben.

Es sind Wege zur Herstellung eines Magnetkopfes mit
geringer Spurbreite bekannt, dessen mechanische
Stabilität durch einen einseitig oder beidseitig am
Ringkern angebrachten Tragkörper erreicht wird. Die
Teile werden durch Verbindungsschichten aus
niederschmelzendem Glas oder aus Silikonharz
miteinander verbunden.

Nachteilig ist hierbei, daß durch die geringen
Haftflächen und durch die teils unzureichende Haftung
der Materialien die Verbindungsstabilität des
Ringkerns (Kernhälften) mit den sie stützenden
Tragkörpern nicht ausreichend ist.

Der Erfindung liegt daher die Aufgabe zugrunde, einen
Magnetkopf mit amorphmetallischen Kernhälften sowie
kleiner Spurbreite und extrem kleiner Spaltbreite zu
schaffen, bei dem alle Kopfteile (Kernhälften und
Kernträger) durch eine Schmelzverbindung der einzelnen

5

Teile miteinander mechanisch stabil verbunden sind, und
die stabile Verbindung für ein Herstellungsverfahren
von Magnetköpfen in großer Stückzahl geeignet und
automatisch durchzuführen ist.

Diese Aufgabe wird erfindungsgemäß durch die
kennzeichnenden Merkmale des Patentanspruchs 1 gelöst.

Einzelheiten der Erfindung werden im folgenden anhand
der Zeichnungen erläutert.

Figur 1     ist eine perspektivische Darstellung von
            zwei verbundenen Halbblöcken zur Herstellung
            eines einzelnen Kopfblocks,

Figur 2     ist eine vergrößert dargestellte Einzelheit
            der Figur 1,

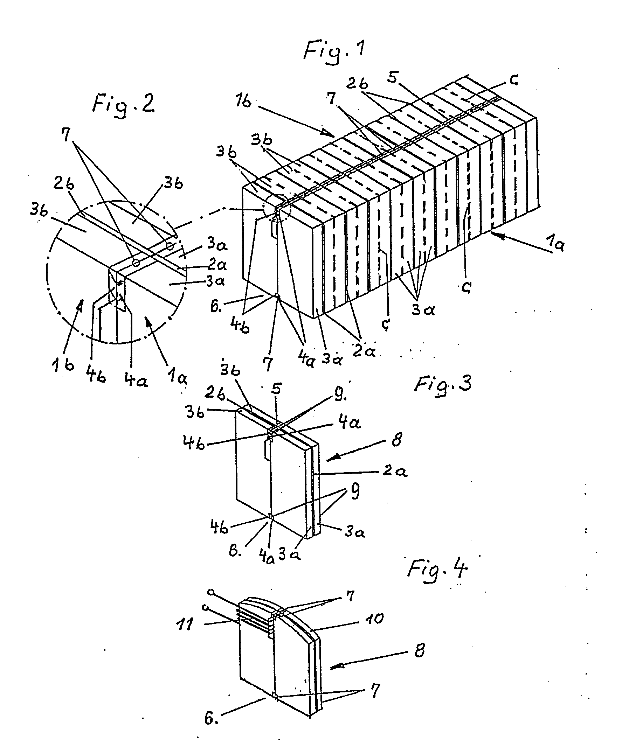

Figur 3     ist eine perspektivische Darstellung eines
            aus zwei verbundenen Halbblöcken abgetrennten
            und unbearbeiteten Kopfblocks,

Figur 4     ist eine Darstellung ähnlich der Figur 3,
            jedoch mit bearbeitetem Kopfspiegel und dem
            gegenüberliegendem Rückschlußbereich.

Aus der Figur 1 ist ersichtlich, wie zwei verbundene
Halbblöcke 1a, 1b aufgebaut sind. Zunächst wird jede

6

Blockhälfte geschichtet, und zwar wird immer eine amorphe Metallfolie als Kernhälfte 2a, 2b zwischen zwei Kernträgern 3a, 3b gelegt. Beide Halbblöcke 1a und 1b werden zuerst durch einen Verbindungskörper 4a, 4b sowohl im Spaltbereich 5 als auch im Rückschlußbereich 6 verbunden. Es ist auch zusätzlich möglich, beim Aufeinanderstapeln der Einzelteile diese vorher mit einer Glas-Zwischenschicht zu versehen, die dann durch Einwirkung von Druck und Temperatur den Halbblock zusätzlich verfestigt. In jedem Fall verbindet jedoch der Verbindungskörper 4a und 4b die Teile in ausreichender Weise. Gemäß einem weiteren Verfahrensschritt werden die als Spaltflächen vorgesehenen Flächen des Halbblocks auf optimale Oberflächenglätte geschliffen, geläppt und poliert. Jede zweite Blockhälfte wird mit einer Schleifnut als Freiraum für die Spulenwindungen versehen. Anschließend wird das unmagnetische Arbeitsspaltmaterial in bekannter Weise, beispielsweise durch Aufdampfen, aufgebracht. Je zwei Halbblöcke werden sodann in einer Vorrichtung mit den bearbeiteten Flächen gegeneinander gedrückt und die Halbblöcke werden an jeder Stelle eines später abzutrennenden einzelnen Kopfblocks sowohl im Spaltbereich 5 als auch im Rückschlußbereich 6 durch Laser-Schweißung 7 verbunden. Der so mechanisch fest verbundene Gesamtblock wird schließlich durch Zersägen entlang den angedeuteten Linien c in einzelne Kopfblöcke bzw. Einzelköpfe zerlegt.

7

Die Figur 2 zeigt in vergrößerter Darstellung eine
Einzelheit aus der Figur 1 und zwar eine Laser-
Schweißstelle 7 im Spaltbereich zur Verbindung beider
Halbblöcke 1a und 1b.

Die Figur 3 zeigt einen vom Gesamtblock abgetrennten
einzelnen Kopfblock 8, dessen Teile erneut an beiden
Flachseiten im Spaltbereich 5 und im Rückschlußbereich
6 über die Verbindungskörper 4a und 4b mittels
Laser-Schweißung 9 verbunden sind. Die einzelnen Teile
des Blocks 8 sind nun mechanisch derart fest
verschmolzen, daß es möglich ist, durch stirnseitige
Bearbeitung auf der Seite des Spaltbereichs und des
Rückschlußbereichs die am Gesamtblock angebrachten
Schweißstellen weitgehendst abzutragen. Hierbei wird
gleichzeitig der Kopfspiegel 10 in der endgültig
gewölbten Form angebracht. Die erneute Verschweißung
der Teile am einzelnen Kopfblock erfolgt an den Stellen,
die ein kritisches Erwärmen der aus amorphem Metall
bestehenden Kernhälften vermeidet. Durch das Abtragen
der stirnseitigen Flächen im Spalt- und
Rückschlußbereich wird zusätzlich zur Bildung der
Kopfspiegelfläche mit der gewünschten Spalthöhe
erreicht, daß die am Gesamtblock durch das Schweißen
entstandenen materialgestörten Stellen im amorphen
Metall der Kernhälften abgetragen werden. Abschließend
wird der einzelne Kopfblock 8 mit Spulenwindungen 11
versehen. Für die Fertigung ist es vorteilhaft, wenn

8

bereits am Gesamtblock die später gewünschte
Kopfspielgeform derart angeformt wird, daß hierbei
die Schweißstellen an der Kopfspiegelseite nicht
abgetragen werden.

VERFAHREN ZUR HERSTELLUNG EINES MAGNETKOPFES

PATENTANSPRÜCHE

1. Verfahren zur Herstellung eines Magnetkopfes, bei dem zwei weichmagnetische Kernhälften aus amorphem Metall über einen unmagnetischen Arbeitsspalt verbunden sind, bei dem die Kernhälften (2a, 2b) beidseitig von zwei Kernträgern (3a, 3b) gestützt zu einem Kopfblock (8) zusammengefaßt sind, und die Kernträger im Spaltbereich und im Rückschlußbereich einen Verbindungskörper (4a, 4b) aufweisen, sowie um mindestens eine Kernhälfte Spulenwindungen gewickelt sind, daß ferner ein Kopfblock (8) aus zwei verbundenen Halbblöcken (1a, 1b) abgetrennt ist, gekennzeichnet durch folgende Verfahrensschritte;

1- nachdem an den beiden schichtweise gestapelten und für sich über die Verbindungskörper (4a, 4b) verbundenen Halbblöcke (1a, 1b) die Spaltfläche bearbeitet und das Arbeitsspaltmaterial aufgebracht

2

ist, werden die beiden Halbblöcke in vorgegebener
Lage mit der Spaltfläche aneinandergedrückt
durch Verschweißen im Kopf-Spaltbereich (5) und
im Rückschlußbereich (6) miteinander verbunden,

2- aus dem Gesamtblock wird nach bekannten
Trennverfahren der einzelne Kopfblock (8)
abgetrennt,

3- der einzelne Kopfblock (8) wird an beiden
Flachseiten im Spaltbereich (5) und im
Rückschlußbereich (6) über die Verbindungskörper
(4a, 4b) verschweißt,

4- die Schweißstellen nach Verfahrensschritt 2 werden
am einzelnen Kopfblock (8) durch stirnseitiges
Schleifen im Spaltbereich (5) und im
Rückschlußbereich (6) bei gleichzeitigem Anbringen
des Kopfspiegels (10) beseitigt.

2. Magnetkopf nach Anspruch 1,  dadurch
gekennzeichnet, daß die beiden Halbblöcke (1a, 1b) und
die Teile des Kopfblocks (8) durch Laser-Schweißung
(9) oder Elektronenstrahl-Schweißung verbunden sind.

3. Magnetkopf nach den Ansprüchen 1 und 2,
dadurch gekennzeichnet, daß die Verbindungskörper (4a,
4b) aus niederschmelzendem Glas bestehen.

Fig. 1

Fig. 2

Fig. 3

Fig. 4